(19) Europäisches Patentamt
European Patent Office
Office européen des brevets

(11) **EP 3 572 332 B1**

## (12) EUROPEAN PATENT SPECIFICATION

(45) Date of publication and mention
of the grant of the patent:
**14.10.2020 Bulletin 2020/42**

(51) Int Cl.:
**B64D 45/00** *(2006.01)* **G05D 1/00** *(2006.01)*

(21) Application number: **19174246.9**

(22) Date of filing: **13.05.2019**

(54) **APPARATUS FOR DETECTING ANOMALOUS AIRCRAFT BEHAVIOR AT TAKEOFF**

VORRICHTUNG ZUR DETEKTION VON ABNORMALEM FLUGZEUGVERHALTEN BEIM START

APPAREIL DE DÉTECTION DE COMPORTEMENT ANORMAL D'AÉRONEF AU DÉCOLLAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.05.2018 US 201815983513**

(43) Date of publication of application:
**27.11.2019 Bulletin 2019/48**

(73) Proprietor: **Honeywell International Inc.**
**Morris Plains, NJ 07950 (US)**

(72) Inventors:
• **ORHAN, Umut**
**Morris Plains, NJ 07950 (US)**

• **MOGHADAMFALAHI, Mohammad**
**Morris Plains, NJ 07950 (US)**
• **JOHNSON, Steve**
**Morris Plains, NJ 07950 (US)**

(74) Representative: **Houghton, Mark Phillip**
**Patent Outsourcing Limited**
**1 King Street**
**Bakewell, Derbyshire DE45 1DZ (GB)**

(56) References cited:
**EP-A2- 0 082 663       EP-A2- 2 637 151**
**WO-A2-2006/137937    US-A- 4 837 695**
**US-A- 4 980 833**

EP 3 572 332 B1

**Description**

TECHNICAL FIELD

Examples of the disclosure described herein relate generally to assessing takeoff performance of an aircraft, and more particularly, examples of the disclosure relate to apparatuses and methods for identifying and explaining anomalous behavior of an aircraft during a takeoff using machine learning applications.

BACKGROUND

Airlines perform reduced thrust takeoff to slow engine deterioration and save on the maintenance costs. Consequently, takeoff rotation speeds are achieved with a slower acceleration and using a longer portion of the runway. Detecting a problem with takeoff performance requires modeling the expected takeoff using aerodynamic models provided by the aircraft manufacturers which are typically proprietary. Even if models are available, large numbers of assumptions are built into the models and it is not possible to account for all of the varying environmental factors. Hence airline carriers need retrofit solutions to predict the aircraft performance and detect possible safety issues preemptively.

Detecting anomalous aircraft behavior can be a difficult problem for various reasons. For example, detecting a problem with takeoff performance requires modeling the expected takeoff using aerodynamic models provided by the aircraft manufacturers which are typically proprietary. Even if models are available, - large numbers of assumptions are built into the models and it is not possible to account for all of the varying environmental factors. However, existence of an enormous amount of real time flight data - produces an opportunity to statistically detect unusual performance.

Accordingly, it is desirable for improving state awareness in real-time during the takeoff process by detecting under performance of a current takeoff of an aircraft by predicting using thrust and prediction modeling at least one takeoff performance characteristic of an aircraft prior to takeoff for a current flight. Furthermore, other desirable features and characteristics will become apparent from the subsequent detailed description and the appended claims, taken in conjunction with the accompanying drawings and the foregoing technical field and background.

US4837695 discloses a method for predicting and monitoring the takeoff performance of an aircraft uses information from one or more previous takeoffs of the aircraft to generate a prediction of the takeoff performance for the current takeoff. In the preferred embodiment, a takeoff profile for the current takeoff is generated and includes information about predetermined characteristics of the aircraft and information about ambient conditions at an airport from which the takeoff is being monitored. Expected performance data for the current takeoff is then generated from the takeoff profile and used to select a set of actual performance data previously stored from the one or more previous takeoffs. A selected "best fit" actual performance data set is then displayed in an appropriate fashion. Upon takeoff, a set of monitored performance data is generated as a function of one or more of sensed takeoff parameters. The monitored performance data set for the current takeoff is then displayed in conjunction with the actual performance data previously selected to provide the crew with an indication of the progress of the current takeoff.

EP0082663 discloses a method wherein The takeoff weight of an aircraft is computed from measures of the thrust of the engines provided by sensors and the forward acceleration provided by an accelerometer, detected over a time period when such acceleration is at a maximum following brake release on the runway. A major variable that must be considered is the coefficient of rolling friction of the landing gear of the particular aircraft involved and other factors inducing ground roll drag. The method is characterized in that it calculates this variable as a function of engine thrust and manifest weight for each takeoff of the aircraft and updates weighted filter values thereof for use during subsequent takeoffs. For each takeoff, therefore, an average value of rolling friction is used to calculate takeoff weight, which average value becomes more nearly the actual value for the existing condition of the landing gear.

WO2006/137937 discloses a runway performance monitor and method for an aircraft, includes providing a control, and monitoring aircraft performance. The control has baseline performance data of the aircraft during takeoff and/or landing. The control compares actual performance of the aircraft during takeoff and/or landing with the baseline performance data and calculates predicted information relevant to takeoff velocity and/or landed velocity. The control may determine braking point data and/or takeoff point data for that aircraft as a function of aircraft performance and runway location and length. The braking point data defines a location relevant to decelerating of the aircraft to a landed velocity. The takeoff point data defines a location relevant to accelerating of the aircraft to takeoff velocity. A display may be provided to display the information relevant to takeoff velocity and/or landed velocity.

EP2637151 discloses methods of illustrating one or more derated takeoffs of an aircraft on a runway where such illustrations are on a flight display in a cockpit of the aircraft and are based on various information and may allow pilots to make more accurate decisions related to derated takeoffs and full thrust takeoffs of the aircraft. The methods include displaying a runway representation on the flight display of a runway from which the aircraft is to takeoff, and displaying one or more takeoff indicia representing a location on the runway where the aircraft is airborne for a thrust setting less than a full thrust setting.

US4980833 discloses a take-off performance monitor uses a sensor to produce a movement signal proportional to the movement of an aircraft during a take-off roll and, for each take-off, historical data is generated and stored based on the movement signal. An analyzing unit of the monitor uses the historical data and current conditions to calculate a reference take-off distance, reference acceleration data and reference velocity data. This information is output to the pilot to facilitate his judgment as to the adequacy to take-off performance.

BRIEF SUMMARY

Some examples of the present disclosure provide a method and apparatus for predicting takeoff performance characteristics prior to takeoff of an aircraft. The present invention in its various aspects is as set out in the appended claims.

In one embodiment, an apparatus according to claim 1 is provided.

In various embodiments, apparatuses according to claims 2-10 are provided.

A recurrent neural network (RNN) model learns temporal characteristics from inputs to perform predictions of future speed calculations with a set of variables related to environmental conditions and aircraft characteristics in the takeoff by the processor. The RNN model performs future speed calculations with an incomplete set of variables related to environmental conditions and aircraft characteristic in the takeoff wherein the RNN learns adaptive techniques to generate a dynamic structure to predict future speeds by the processor.

In an example of the disclosure not according to the invention, a method for detecting performance of a current takeoff of an aircraft is provided by predicting at least one takeoff performance characteristic of an aircraft prior to takeoff for a current flight is provided. The method includes: deploying on the aircraft, the at least one processor being programmed to implement, when a model of thrust based on a look-up table is unavailable, a trained model of thrust of the aircraft during a takeoff having a first component based on sensor data contributed from the current flight takeoff and having a second component based on derivative data contributed from a prior flights takeoff wherein the first and second components used in the model of the thrust are based on one aircraft takeoff characteristics of: acceleration from thrust, friction from slope, and drag from friction of the aircraft during the takeoff by; receiving sensor data at an input from at least one sensor system deployed on the aircraft; associating a memory for acquiring, prior to the takeoff for the current flight, the derivative data contributed from prior takeoffs flights; programming to use the trained thrust model to predict, under conditions of missing or uncertain information about the aerodynamic characteristics of the thrust or engine of the aircraft or environmental conditions and related to a takeoff performance characteristic for a subsequent takeoff time in the future relative to a current takeoff time; and configuring to supply the at least one takeoff performance characteristic to an avionics system on board the aircraft.

The method further includes: predicting, by the processor, future speed calculations of takeoff of the aircraft using a neural network model implemented as a long short-term memory (LSTM). The method further includes: calculating, by the processor, from a set of characteristics of prior flights an estimate of a thrust output corresponding to a set of variables measured by a plurality of sensors of a particular aircraft wherein the set of variables include: airspeed, revolutions per minute (RPMs) of an engine, temperature and pressure ratios wherein the thrust of the aircraft corresponds directly to a particular set of the airspeed, RPMs of the engine, temperature and pressure ratios. The thrust model incorporates specific scaling factors to account for factors retarding thrust in the thrust model which are unmeasured.

The acceleration model or the speed prediction model determines, by a particular parameter, an influence of prior flight data in calculations of the acceleration or the speed prediction models. The method further includes: the at least one processor being programmed to use a prediction model to predict, under conditions of missing or uncertain information about the aerodynamic characteristics of the thrust or engine of the aircraft or environmental conditions, at least one related to a future speed for a subsequent takeoff at a subsequent takeoff time in the future relative to a current takeoff time based on estimations of corresponding flight specific parameters wherein the aerodynamic characteristic include: a set of measurements up to a current time.

In yet another example of the disclosure not according to the invention, a non-transitory, computer-readable medium containing instructions thereon, which, when executed by a processor, perform a method is provided. The method includes: implementing, by the processor, when a model of thrust based on a look-up table is unavailable, a trained modeling of thrust of the aircraft during a takeoff having a first component based on sensor data contributed from the current flight takeoff and having a second component based on derivative data contributed from a prior flights takeoff wherein the first and second components used in the modeling of the thrust are based on one aircraft takeoff characteristics of: acceleration from thrust, friction from slope, and drag from friction of the aircraft during the takeoff by; receiving, by the processor, sensor data from at least one sensor system deployed on the aircraft; associating, by the processor, a memory for acquiring, prior to the takeoff for the current flight, the derivative data contributed from prior takeoffs flights; instructing, by the processor, to use the trained thrust model to predict, under conditions of missing or uncertain information about the aerodynamic characteristics of the thrust or engine of the aircraft or environmental conditions, and related to a takeoff performance characteristic for a subsequent takeoff time in the future relative to a current takeoff time; and configuring, by the processor, to supply the at least one takeoff performance characteristic to an avionics system on board the aircraft.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.

FIG. 1 illustrates the forces acting on an aircraft during a takeoff monitored by data driven systems for identifying and explaining anomalous behavior of an aircraft in accordance with various exemplary embodiments;

FIG. 2 illustrates a block diagram of modeling of thrust by data driven systems for identifying and explaining anomalous behavior of an aircraft in accordance with various exemplary embodiments;

FIG. 3 illustrates a block diagram of modeling of future speeds by data driven systems for identifying and explaining anomalous behavior of an aircraft in accordance with various exemplary embodiments;

FIG. 4 illustrates a block diagram of a Recurrent Neural Node (RNN) model for use in the speed estimation modeling by data driven systems for identifying and explaining anomalous behavior of an aircraft in accordance with various exemplary embodiments;

FIG. 5 illustrates a diagram of a long short term memory (LSTM) network modeling by data driven systems for identifying and explaining anomalous behavior of an aircraft in accordance with various exemplary embodiments;

FIG. 6 illustrates a diagram of a 3-layer LSTM neural network by data driven systems for identifying and explaining anomalous behavior of an aircraft in accordance with various exemplary embodiments;

FIGS. 7A and 7B illustrate graphs of absolute and relative errors in speed prediction with changing prediction range by data driven systems for identifying and explaining anomalous behavior of an aircraft in accordance with various exemplary embodiments;

FIGS. 8A, 8B and 8C illustrate prediction errors at various speeds for predicting 3 seconds ahead, 5 seconds ahead, and 8 second by data driven systems for identifying and explaining anomalous behavior of an aircraft in accordance with various exemplary embodiments;

FIGS. 9A, 9B, and 9C disclose graphs of flights with low acceleration by data driven systems for identifying and explaining anomalous behavior of an aircraft in accordance with various exemplary embodiments;

FIG. 10 is a diagram of a communication network of a system for providing modeling of predicted accelerations by data driven systems for identifying and explaining anomalous behavior of an aircraft in accordance with various exemplary embodiments; and

FIG. 11 is a block diagram of architecture of a system for providing modeling of predicted accelerations by data driven systems for identifying and explaining anomalous behavior of an aircraft in accordance with various exemplary embodiments.

DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

Airlines routinely perform reduced thrust takeoff to improve engine reliability, maintenance, and operating costs. Utilization of less than maximum thrust reduces the engine deterioration, hence engine manufacturers encourage operators to perform reduced thrust takeoffs whenever possible. In addition to economic benefits by a corresponding increase in the engine life, there is also the benefit of enhanced flight safety by even further decreasing the likelihood of engine failures during a flight. However, when a contrary action occurs of insufficient thrust and correspondingly acceleration there is introduced another safety issue as a result of aircraft runway excursions or climbing problems. A statistical analyses conducted by aircraft manufacturers indicates takeoff and/or an initial climb are relatively high-risk operations. This may be due to various contributing factors: human input errors, unanticipated aircraft and environmental conditions, incorrect assessment of the current state of the takeoff by the pilot etc. Henceforth, it is important to introduce state awareness in real-time during the takeoff process.

Typically, the takeoff distances and thrust settings are calculated prior to takeoff utilizing temperature, pressure, weight, assumed runway and wind conditions via flight management systems. In the case of an unexpected condition deviating from the standard behavior, the acceleration levels corresponding to the takeoff distances may become different compared to the initial estimate. Examples include, but are not limited to, runway contamination, wing frost, tire pressure and changes in the wind conditions. Consequently, there exists a need for a retrofit system to monitor various sensor measurements in real time, assess the corresponding impact on the takeoff, and offer guidance for takeoff rejection or thrust adjustment.

A real-time takeoff assessment system requires modeling the expected takeoff using aerodynamic models provided by the aircraft manufacturers. However, these models and various aircraft parameters are typically proprietary. Even if models are available, large numbers of assumptions are built into the models and it is not possible to account for all the varying environmental factors. Hence airline carriers need retrofit solutions to predict the aircraft performance and detect possible safety issues preemptively.

In various embodiments, the present disclosure describes a real time, highly accurate speed prediction system and method for use during takeoff to improve the safety of the takeoff in the case of retarded acceleration and to introduce cost savings and engine reliability in the cases of greater than required acceleration.

In various exemplary embodiments, the challenges posed in performance estimations are overcome by developing predictive models in a data driven manner utilizing an extensive flight database acquired through use by commercial carriers. For example, the aircraft ground speed at 10 seconds ahead of the current time can be predicted with an error below 3 knots utilizing two methods of differing objectives: (1) deep long short-term memory (LSTM) networks for a purely data driven method, (2) model based learning of the aircraft and engine characterization, estimation of flight parameters, and numerically solving the corresponding differential equations for enabling a more transparent and explainable approach.

In various exemplary embodiments disclosed, the challenges posed of performance estimation are overcome by developing predictive models in a completely data driven manner utilizing historic information of an extensive flight databases acquired by large commercial airlines. The aircraft ground speed 10 seconds ahead of the current time was predicted with an error below 3 knots utilizing two methods of differing objectives: (1) deep LSTM networks for a purely data driven method, (2) model based learning of the aircraft and engine characterization, estimation of flight parameters, and numerically solving the corresponding differential equations for enabling a more transparent and explainable approach.

The subject matter presented herein relates to apparatuses and methods for assessing the takeoff performance of an aircraft, detecting under-performing take-offs and providing an explanation and/or alert to the flight crew of the under-performance condition by using machine learning applications. More specifically, the subject matter relates to identifying applicable aerodynamical model based predictions from forces during takeoff with deep neural network based predictions associated with operation of the aircraft during the takeoff, and identifying instances of potential anomalies based on the comparisons.

The present disclosure describes a methodology of using a prediction process to monitor a takeoff performance that includes: constructing a direct model for the estimation of the takeoff performance in the future using past and current measurements using a flight database for the aircraft and an estimation of the aircraft specific model characterizations using a flight database for the aircraft and joint utilization of past and current measurements to estimate the environmental effects and model deviations, and model equation based prediction of the takeoff performance.

The methodology described is desired because there is a need for airline carriers to retrofit dated systems and to have transparent solutions to detect unusual performance to assess and train the flight crew without having to undertake an elaborate modeling programming computations or adding additional sensors to the aircraft. The current disclosure provides a methodology that not only can provide explanations about anomalies detected in performance, but can be integrated into existing hardware without hardware modifications. That is, current systems can easily be updated with the methodology described without the reliance of any additions.

The takeoff performance is estimated utilizing aircraft specific, often proprietary, parameters and models which assume certain environmental conditions. The takeoff performance estimates can be performed in a completely data driven manner without requiring the aircraft specifications. An accurate estimation of the performance can be derived in real time, which in turn increases the safety of the takeoff and enables cost savings on engine maintenance and fuel by making a corresponding thrust adjustments in a particular performance scenario.

AERODYNAMIC MODEL GUIDED PREDICTION

*Classical Modeling of Takeoff Acceleration*

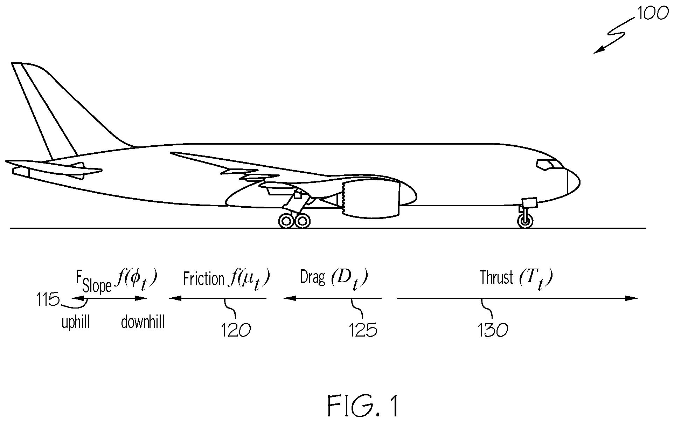

FIG. 1 illustrates the forces acting on an aircraft during takeoff in accordance with an exemplary embodiment. The forces acting on an airplane on the ground during the takeoff acceleration are not constant. Correspondingly, the acceleration of the aircraft also changes during the takeoff roll. The summary of the various forces assessed is depicted in FIG. 1 when taking off in accordance with an embodiment. It is desired to predict future speeds derived from various conditions of the aircraft under current conditions when taking off. The forces 100 of the aircraft 110 taking off may include $F_{slope}$ 115, friction 120, drag 125 and thrust 130. There are a multitude of obstacles encountered when trying to predict each of the forces 100 which are based on the ability to retrieve proprietary aircraft data and environmental conditions during the takeoff.

The primary positive force for the initial acceleration is the thrust of engines. However, thrust typically decreases as airspeed of the airplane increases. Correspondingly, thrust generally decreases during the ground roll. Slope of the runway makes a small contribution to the total acceleration force due to the component of the gravity that is parallel to the runway surface. Expectedly, the slope would induce forces $F_{slope}$ 115 of a positive force during a downhill takeoff and a negative force during an uphill takeoff.

Two forces acting in opposition to thrust 130 are the aerodynamic drag 125 and rolling friction 120. The motion of the airplane relative to the air mass creates an opposing resistance by the air (drag). Like thrust, aerodynamic drag 125 is also a function speed. As the air speed of the aircraft increases, the corresponding air resistance also increases. The other force that retards the aircraft acceleration is the rolling friction resulting from the contact resistance between the aircraft's wheels and the runway surface. The friction force 120 is proportional to the downward force applied to the ground through the wheels. Interestingly, the friction force 120 decreases as the aircraft speeds up, hence positively impacting the acceleration. This phenomenon is due to the increase in lift force acting against the weight of the aircraft, correspondingly reducing the effective force applied to ground.

The horizontal forces during takeoff at time t can be described in equation (1).

$$F_t = T_t - D_t - \mu_t(W_t - L_t) - W_t sin(\phi_t) \qquad (1)$$

where $T_t$ is the total thrust of the engines,

$D_t$ is the aerodynamic drag,

$\mu_t$ is the rolling friction coefficient,

$W_t$ is the airplane weight,

$L_t$ is the aerodynamic lift,

$\phi_t$ is the runway slope.

Also, *W-L* represents the vertical force to the ground, which decreases with increased lift. In this disclosure, runway conditions are assumed to be consistent along the runway, i.e. $\mu_t$ and $\phi_t$ are constant during the take-off. Representing lift and drag forces in term of lift coefficient ($C_L$) and drag coefficient ($C_D$), and using Newton's second law of motion, the acceleration along the runway becomes as expressed in equation (2):

$$a_t = g\left[\frac{T_t}{W_t} - (\mu - sin\phi) - (C_D - \mu C_L)\frac{q_t S}{W_t}\right] \qquad (2)$$

where S is the surface wing area and $q_t$ is the dynamic pressure. $T_t$ and $q_t$ are functions of the speed of the airplane, hence making the acceleration variable. More explicitly, thrust is a function of engine N1 rotation speeds, static air temperature, pressure ratio, and true air speed; and

$$q_t = \frac{1}{2}\rho_t v_{true,t}^2 \qquad (3)$$

where $p_t$ is the air density and $v_{true}$ is the true air speed.

The equations described to this point are utilized in performance calculations. Corresponding takeoff distances are calculated using these equations via various assumptions on the environmental conditions, proprietary coefficients and performance tables prior to takeoff as follows: (i) Known $C_L$ and $C_D$: with the assumption that lift and drag coefficients are often proprietary. Moreover, there exists flight specific minor variations on these coefficients due to environmental conditions, e.g. residual frost on the wings decreases the lift coefficient, or due to difficult-to-account-for contributors, e.g. antennas; (ii) Assumed rolling friction coefficient ($\mu$): In typical calculations, the runway conditions are selected from various categories based on the surface groove and wetness. However, the actual friction coefficient may be different due to runway contamination, tire pressure or runway surface temperature; (iii) Weight of the airplane: The initial weight of the aircraft is typically entered manually based on the fuel, load and assumed average weight of humans. Correspondingly, weight is both error prone and is not very precise. There also exists weight decrease over time, which is negligible during takeoff; (iv) Air density: Calculated from static air temperature and pressure. Since performance calculations are not performed in real time, the typical calculations are not robust to the difference between the airport and runway temperatures or pressure changes. Moreover, some of the relevant information may be entered manually, which is further susceptible to human errors. Other variables include: (v) Surface wing area (S): Constant for the airplane type, which is publicly available; (vi) Wind speed: Headwind or tailwind speed also gets factored in during the conversion of ground speed to true air speed.(vii) Thrust: Thrust is typically calculated through tables of speed and N1, and corrected for pressure. Thrust formulation is usually proprietary by the engine manufacturers. (viii) Numerical integration: Equation (2) is numerically integrated, e.g. via Simpson's rule, in an offline manner to obtain the takeoff distances and speeds.

In an alternate exemplary embodiments, each of the forces may be modeled as follows:

$$a = g\left[\frac{T}{W} - (\mu + sin\phi) - \frac{1}{2W}(C_D - \mu C_L)S\rho v_{true}^2\right]$$ where Acceleration from thrust is $$a = g\left[\frac{T}{W} \; ...\right],$$ friction and slope is $a = g[... - (\mu + sin\phi) \; ...]$ and friction and drag is $$a = g\left[... - \frac{1}{2W}(C_D - \mu C_L)S\rho v_{true}^2\right].$$

As listed above, there exists various factors that may unexpectedly unduly influence the aircraft takeoff performance. Therefore, to overcome errors, the present disclosure provides a methodology to estimate the future takeoff speeds with joint utilization of current and historical sensor measurements, without relying on the proprietary information from the aircraft manufacturers, assumed runway conditions or environmental conditions.

*Modeling of Thrust*

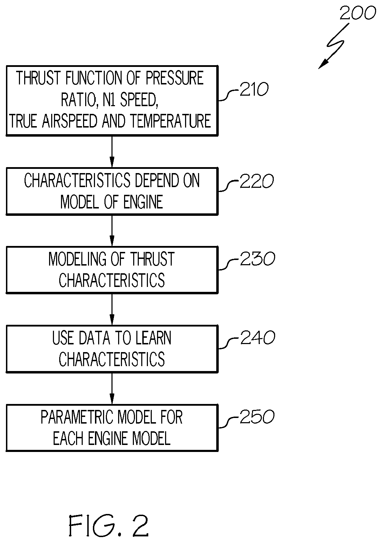

FIG. 2 is a flowchart that illustrates a process for modeling thrust in accordance with an exemplary embodiment. Thrust is the largest propelling force during the ground roll. The functional change in engine thrust for varying speed and N1 percentage is typically proprietary, even under standard atmospheric conditions. Henceforth, the establishment of a proper model for thrust constitutes an important component for a successful data driven construction of the takeoff model. Net thrust output in block 210 of a turbojet engine has been found to strongly depend on the following variables: Air speed, $v_{true}$; Ambient air pressure, $p$; Engine diameter, $D$; Net thrust, $T$; Ambient air temperature, $T$; and Engine RPM, $N1$. That is, the net thrust output in block 210 is a function of pressure ratio, temperature, N1 speed and true air speed.

Utilizing the well-known Buckingham $\pi$-Theorem of dimensional analysis, the functional form of the thrust of an engine can be simplified to equation (4) below:

$$T_{net} = \delta f\left(\frac{v_{true}}{\sqrt{\theta}}, \frac{N1}{\sqrt{\theta}}\right) \qquad (4)$$

where $\delta$ and $\theta$ represent the pressure and temperature ratios, respectively. $\widetilde{N}1 = N1/\sqrt{\theta}$ is typically referred as corrected N1 and $\tilde{v}_{true} = v_{true}/\sqrt{\theta}$ is proportional to Mach number.

Continuing with the flow, the modeling of the thrust is performed separately for each engine model in block 220, since the engine characteristics modeled in block 230 may be different. The model for the total thrust force becomes the summation of the thrusts for all engines as described in Equation 5,

$$T_{total} \approx \sum_{\varepsilon \in engines} \delta \hat{f}(\tilde{v}_{true}, \tilde{N}1_\varepsilon | \Theta) \qquad (5)$$

where $\Theta$ represents the parameters of the 2-d polynomial.

As mentioned earlier, functions of the engine thrust characteristic may not be obtainable as such solutions are often proprietary in nature. In block 240, to overcome this obstacle, solutions may be derived by using the data to learn the characteristics and by reiterative training of the modeling of the thrust characteristic.

The engine thrust characteristic function $f(\tilde{v}_{true}, \tilde{N}1)$ is often stored and utilized through proprietary look-up tables or charts by engine and airplane manufacturers and it is engine specific. Continuing to block 250, to enable the utilization of thrust without this information, the solution assumes a form of a two-dimensional polynomial with the assumption of engine thrust being zero if both N1 and airspeed are zero. Although there exist various forms of parametrization of engine thrust in the literature, the parametric model disclosed herein has been verified to achieve an accuracy of more than 98% through two proprietary thrust data examples.

*Parameter Estimation*

During the modeling of the takeoff acceleration, we assume $\mu$ and $\beta = C_D - \mu C_L$ to have a flight specific variation. Upon this consideration and modeling the thrust as will be further described is a minimum mean square estimation (MMSE) minimizing the error in acceleration over thrust model parameters $\Theta$, as described in equation (6) below:

$$\hat{\Theta} = \arg\min_{\Theta} \sum_{k \in flights} \left\| a_{k,t} - \left( -(\mu_k + \sin\phi_k)g_k - \beta_k \frac{g_k q_{k,t} S}{W_{k,t}} + \frac{g_k}{W_{k,t}} \sum_{\varepsilon \in engines} \delta_{k,t} \hat{f}(\tilde{v}_{true,k,t}, \tilde{N}1_{\varepsilon,k,t} | \Theta) \right) \right\|_2^2 \qquad (6)$$

where $\mu_k$ and $\beta_k$ represent the flight specific variations. The solution of (6) considers an optimization over $\mu_k$ and $\beta_k$ for each flight. Note that the parameters of the thrust model are common across all flights. Although it may not be obvious from the equation, this is a very large scale optimization problem that reduces to the following system of equations,

$$\underbrace{\begin{bmatrix} \mathbf{Q}_0 & \mathbf{R}_1 & \mathbf{R}_2 & \cdots & \mathbf{R}_M \\ \mathbf{Q}_1 & \mathbf{S}_1 & 0 & \cdots & 0 \\ \mathbf{Q}_2 & 0 & \mathbf{S}_2 & \cdots & 0 \\ \vdots & \vdots & \vdots & \ddots & \vdots \\ \mathbf{Q}_M & 0 & 0 & \cdots & \mathbf{S}_M \end{bmatrix}}_{\mathbf{A}} \begin{bmatrix} \mathbf{\Theta} \\ \mu_1 \\ \beta_1 \\ \mu_2 \\ \beta_2 \\ \vdots \\ \mu_M \\ \beta_M \end{bmatrix} = \begin{bmatrix} \mathbf{r}_0 \\ \mathbf{r}_1 \\ \mathbf{r}_2 \\ \vdots \\ \mathbf{r}_M \end{bmatrix} \qquad (7)$$

where M is the number of flights in the historical data. The dimensions of these components are as the following: $\mathbf{Q}_0$ (d $\times$ d), $\mathbf{r}_0$ (d $\times$ 1), $\mathbf{Q}_j$ (2 $\times$ d), $\mathbf{R}_j$ (d $\times$ 2), $\mathbf{S}_j$ (2 $\times$ 2), $\mathbf{r}_j$ (2 $\times$ 1) for $j \in \{1, \dots, M\}$, where d is the number of parameters in $\Theta$. An ordinary solution of (10) has a computational complexity of $O(M^{2.373})$ and a memory requirement of $O(M^2)$, which corresponds to more than 70 GB RAM for approximately 50,000 historical flights. However, the utilization linear algebra techniques of block diagonal and block matrix inversion makes the analytical solution of this problem to be feasible without the need of a supercomputer processing capability by reducing the computational complexity to $O(M)$ and memory requirement to $O(M)$. In more detail, let S, $\mathbf{Q}_{1:M}$, $\mathbf{R}_{1:M}$ be

$$\mathbf{Q}_{1:M} = \begin{bmatrix} \mathbf{Q}_1 \\ \mathbf{Q}_2 \\ \cdots \\ \mathbf{Q}_M \end{bmatrix}, \quad \mathbf{R}_{1:M} = [\mathbf{R}_1, \mathbf{R}_2, \cdots, \mathbf{R}_M], \quad \mathbf{S} = \begin{bmatrix} \mathbf{S}_1 & 0 & \cdots & 0 \\ 0 & \mathbf{S}_2 & \cdots & 0 \\ \vdots & \vdots & \ddots & \vdots \\ 0 & 0 & \cdots & \mathbf{S}_M \end{bmatrix}.$$

From block diagonal matrix inversion, $S^{-1}$ can trivially be obtained as the following

$$\mathbf{S}^{-1} = \begin{bmatrix} \mathbf{S}_1^{-1} & 0 & \cdots & 0 \\ 0 & \mathbf{S}_2^{-1} & \cdots & 0 \\ \vdots & \vdots & \ddots & \vdots \\ 0 & 0 & \cdots & \mathbf{S}_M^{-1} \end{bmatrix}$$

Using block matrix inversion, inverse of A becomes:

$$\mathbf{A}^{-1} = \begin{bmatrix} \mathbf{Q}_0 & \mathbf{R}_{1:M} \\ \mathbf{Q}_{1:M} & \mathbf{S} \end{bmatrix}^{-1} = \begin{bmatrix} \mathbf{Q}_{-1} & -\mathbf{Q}_{-1}\mathbf{R}_{1:M}\mathbf{S}^{-1} \\ -\mathbf{S}^{-1}\mathbf{Q}_{1:M}\mathbf{Q}_{-1} & \mathbf{S}^{-1} + \mathbf{S}^{-1}\mathbf{Q}_{1:M}\mathbf{Q}_{-1}\mathbf{R}_{1:M}\mathbf{S}^{-1} \end{bmatrix},$$

where

$$\mathbf{Q}_{-1} = (\mathbf{Q}_0 - \mathbf{R}_{1:M}\mathbf{S}^{-1}\mathbf{Q}_{1:M})^{-1} = (\mathbf{Q}_0 - \sum_{j=1}^{M} \mathbf{R}_j\mathbf{S}_j^{-1}\mathbf{Q}_j)^{-1}$$

$$\mathbf{S}^{-1}\mathbf{Q}_{1:M} = [\mathbf{S}_1^{-1}\mathbf{Q}_1, \cdots, \mathbf{S}_M^{-1}\mathbf{Q}_M]^T$$

$$\mathbf{R}^{1:M}\mathbf{S}_{-1} = [\mathbf{R}_1\mathbf{S}_1^{-1}, \cdots, \mathbf{R}_M\mathbf{S}_M^{-1}]$$

which can all be calculated in O(M) time.

Correspondingly, a thrust model representing the engine characteristics as a function of speed and revolutions per minute (RPM) is learnt by solving the matrix vector equation in (6). There may also exist additional factors retarding the thrust that is unmeasured or difficult to account for, e.g. humidity or ash. Hence, we incorporate a flight specific scaling variable, $\alpha$, to thrust. Such a variable would also accommodate errors in the weight measurements; which are typically reported via subtraction of fuel burn from an initial rough estimate of the initial weight.

Finally, for the estimation of the parameters during the takeoff, is given cost consideration in a cost function combining the data from the current flight with prior ones as depicted in (8)

$$\min_{\alpha,\beta,\mu} \underbrace{\sum_{\tau=1:t} \left( a_\tau + (\mu + \sin\phi)g + \beta\frac{gq_\tau S}{W_\tau} - \alpha\frac{g}{W_\tau}T_\tau \right)^2}_{\text{contribution from current flight}} + \lambda \underbrace{\sum_{k \in prior\ flights} \sum_{\tau=1:t_k} \left( a_{k,\tau} + (\mu + \sin\phi_k)g + \beta\frac{gq_{k,\tau} S}{W_{k,\tau}} - \alpha\frac{g}{W_k}T_{k,\tau} \right)^2}_{\text{contribution from prior flights}} \qquad (8)$$

where the parameter $\lambda$ determines the level of influence of the prior flights. The thrust force at each time point for the current flight, $T_\tau$, and the prior flights $T_{\tau,k}$ are calculated from the polynomial model approximation learnt in (6) as a function of airspeed, pressure ratio, temperature and engine N1. As described in this disclosure, $\lambda$ was selected such that the contribution of the current flight becomes equal to the total contribution of all the other flights. Correspondingly, flight specific adaptation for the takeoff parameters, while utilizing historical data is enabled.

As shown in block 250, this is the Parametric model (2-d polynomial) for each engine model: $f(n, v; \Theta)$.

The parameters of the thrust model parameters are common across all flights. It should be noted that this is a very large scale optimization problem. By the utilization of linear algebra techniques of block diagonal and block matrix inversion in the parametric model, the analytical solution of this problem is feasible without the need for exceptional processing capabilities (i.e. super-computer processors).

Correspondingly, a thrust model representing the engine characteristics on various speed and revolutions per minute (RPM) conditions is learned by iteratively training the model with current characteristic data. There may also exist additional factors retarding the thrust that are unmeasured or difficult to account for, e.g. humidity or ash. Hence, it is or may be necessary to incorporate a flight specific scaling variable, $\alpha$, to thrust. Such a variable would also accommodate errors in the weight measurements, which are typically reported via subtraction of fuel burn from an initial rough estimate of the initial weight.

In various exemplary embodiments, the thrust may be modeled as follows: Parametric model (2-d polynomial) for each engine model: $f(n, v; \Theta)$

$$\text{MMmin}_{\Theta,\alpha,\beta} \sum_{k:flight} \left\| \frac{g_k \delta_k f(\tilde{N}_{1,k},\tilde{v}_{true,k}; \Theta_{engine})}{W_k} - \alpha_k g_k - \beta_k \frac{g_k \rho_k v_{true,k}^2}{W_k} - a_k \right\|_2$$

SE Estimator:

$$\min_{\Theta,\alpha,\beta} \sum_{k:flight} \left\| \frac{g_k \delta_k f(\tilde{N}_{1,k},\tilde{v}_{true,k}; \Theta_{engine})}{W_k} - \alpha_k g_k - \beta_k \frac{g_k \rho_k v_{true,k}^2}{W_k} - a_k \right\|_2$$

Coefficient representing the variation in $(\mu + sin\phi)$

$$\min_{\Theta,\alpha,\beta} \sum_{k:flight} \left\| \frac{g_k \delta_k f(\tilde{N}_{1,k},\tilde{v}_{true,k}; \Theta_{engine})}{W_k} - \alpha_k g_k - \beta_k \frac{g_k \rho_k v_{true,k}^2}{W_k} - a_k \right\|_2$$

where
Coefficient represent variances in $(C_D - \mu C_L)$

*Prediction of Future Speeds*

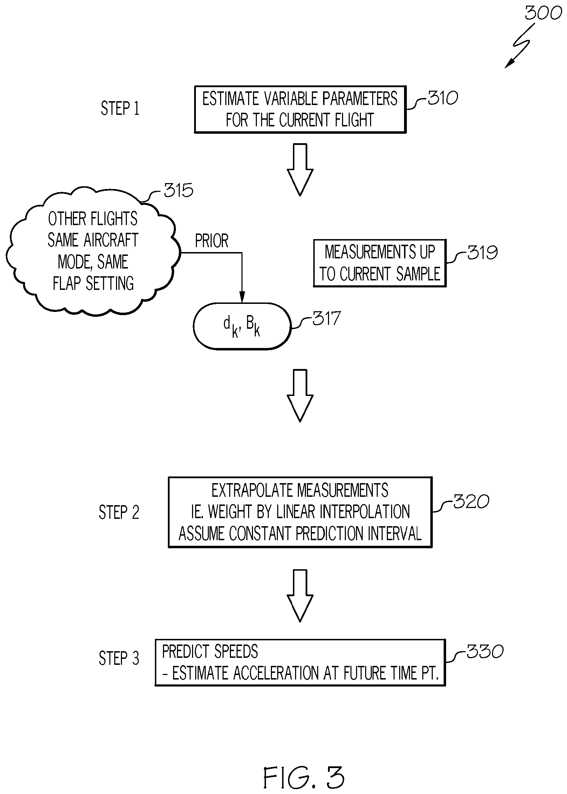

FIG. 3 illustrates a process flow diagram 300 of the future speeds of the detection of anomalous aircraft behavior system, in accordance with an embodiment.

In FIG. 3, in step 1 in block 310, the estimates of the variable parameters of the current flight is performed. Next, at 315, variable parameters for an initial or provisional step 1 are received and may include other flights of the same, similar, or like aircraft model and flap setting for estimation. Also, upon the estimation of the corresponding flight specific parameters 317, measurements may also be utilized up to current time prior to takeoff or execution of the system using up to the minute real time data received at 319.

At step 2, block 320, the measurements are extrapolated; for example, a linear extrapolation is applied to determine the weight of the aircraft; additionally, assumptions are made based on a constant or unchanged prediction interval where the wind speed equals the ground speed minus the true air speed, the static air temperature is used, the N1 is determined to be the speeds of the engines, the pressure is used for altitude determinations.

The ground speed is modeled by a first-order ordinary different equation as shown in equation (6) below:

$$\dot{v}_{gnd}(t) = h(t, v_{gnd}(t)), \ v_{gnd}(t_n) = v_{current} \qquad (9)$$

where $h$ represents a realization of equation (2) based on the estimated model parameters. The most current ground speed measurement becomes the boundary condition for the prediction of the future speeds. The evaluation of $h$ at a future time point requires the utilization of various basic measurements in the future, which are calculated according to Table 1 below:

Table 1: Extrapolation of Basic Measurements

| Weight | The weight of the airplane experiences a very slight decrease due to fuel burn. Although the change in the weight is negligible, we perform a basic linear extrapolation. |
|---|---|
| Wind speed | Wind speed, temperature and pressure are assumed to be unchanging since the most recent measurement. Wind may contain variable effects due to gusts, which are ignored. |
| Temperature | |
| Pressure | |
| Engine N1 percentages | Speed predictions in this article are conducted based on the current N1 percentages. However, it is possible to estimate the immediate effect of an increase or decrease engine N1 speeds. |

The final step of the speed prediction modeling at step 3 at 330, the numerical solution to the differential equation of speed (8) was achieved via Adams-Bashforth methods. Adams-Bashforth is a family of linear multistep methods to numerically approximate the solutions of the ordinary differential equations. Rather than using a single step methodology used in takeoff performance calculations, the use of a multistep method as described in the exemplary embodiments, is a more accurate approach because it is based on utilizing several previous points and derivatives, resulting in better data quantification and subsequent results.

PREDICTION THROUGH DEEP LSTM NETWORKS

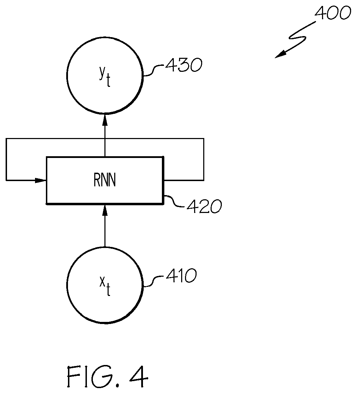

FIG. 4 illustrates a recurrent neural node model for use in the speed estimation model in accordance with an embodiment.

The structure of neural networks can be considered a connected neural network having layers of nodes that are receiving messages from one layer before, and transmitting messages to a layer after. In this regime, all neurons can receive a message from any unit in an earlier layer and the learnt problem is defined around adjusting the weights for these connections and biases for each node. But in many problems, it is not feasible to train such a complex system especially when the dimensionality of input data is high. Hence, in some problems, a sparse version of such systems, has demonstrated the best results, e.g. convolutional neural networks in computer vison problems or recurrent neural networks in speech recognition.

The neural networks are based on a collection of computational units called as "artificial neurons". In these systems, each neuron, can receive signals from neighboring units and accordingly, after some processing, it can transmit messages to its adjacent neurons [7]. The artificial neuron processes the incoming messages, $x_i$, as defined in equation (10), to produce an outgoing message, $y$.

$$y = f\left(\sum_i m_i x_i + b\right) \qquad (10)$$

In this equation (10), $m_i$, represent the weight defined for the connection between the target neuron and neuron $i$, and $b$ is the bias defined for target neuron. The function $f$ is a nonlinear operation. The most popular function forms for $f$ is sigmoid, tanh or rectified linear function known as rectifier or rectified linear unit or ReLU.

More specifically, recurrent neural networks (RNNs) composed on recurrent nodes 400 may be configured to learn functions over the data distributed in time. At each time t, the RNN processes the input signal $X_t$ 410 and the encoded information from a signal propagated from earlier time points 420 depicted in FIG. 4. FIG. 4 illustrates that a chunk of neural network, RNN, looks at an input signal Xt 410 and outputs an output signal 430 of value Yt. A loop allows information to be passed from one step of the network to the next.

The RNNs may be configured to introduce different applications with long-short term memory (LSTM) systems and also a less complex structure or gated recurrent units (GRUs) when required. The RNN structures have been designed to enable the usage of long term memory, which is not feasible in traditional RNN design due to the problem of a vanishing gradient during a back propagation. More specifically, recurrent neural networks (RNNs) are the ones that are designed to learn functions over the data distributed in time. At each time step, t, RNN processes the input signal and the encoded information from signal propagation in time from earlier steps

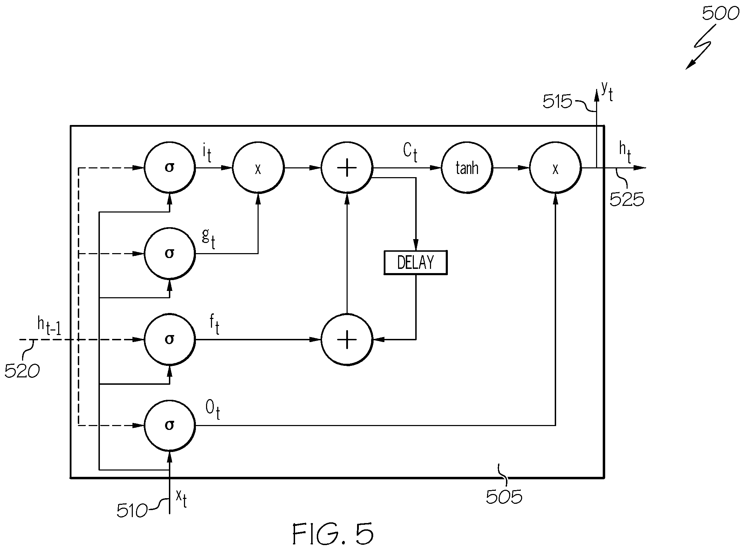

FIG. 5 illustrates a diagram of a long short term memory (LSTM) network 500 in accordance with an embodiment. The LSTM and gated recurrent unit (GRU) structures resolve the problem of long-term memory through gating mechanisms and storing cell states. The LSTM network 500 is composed of 4 main components. These include a cell 505, an input gate 510, an output gate 515 and a forget gate 520 and 525. The gating is used in this system to store, update or, forget information in cell states. The equations used in LSTMs may include the following:

$$f_t = \sigma_g(M_f x_t + U_f h_{t-1} + b_f)$$
$$i_t = \sigma_g(M_i x_t + U_i h_{t-1} + b_i)$$
$$o_t = \sigma_g(M_o x_t + U_o h_{t-1} + b_o) \qquad (11)$$
$$c_t = f_t * c_{t-1} + i * \tanh_c(M_c x_t + U_c h_{t-1} + b_c)$$
$$y_t = h_t = o_t * \tanh_h(c_t)$$

In the above equations, $\sigma$ represents the sigmoid function, * operator is element wise multiplication, $x_t$ is the input vector to the layer indexed by time $t$, $h_t$ and $y_t$ are the output of LSTM unit at time $t$, *Wand U* are the weight matrixes and $b$ is the bias term.

The cell state vector at time $t$ in these equations is represented by $c_t$, while the value of the state vector is

administered by $f_t$, the forgetting gate activation vector $i_t$; and the input gate activation vector $g_t$. Also, the output of the cell $h_t$ is a function of cell state and is controlled by the output gate activation vector as depicted in FIG. 5.

Among different structures of RNNs introduced for different applications, long-short term memory (LSTM) system and a simpler version of it, known as gated recurrent units (GRUs), have attracted significant attention. These structures have been designed to enable the usage of long term memory which is not feasible in traditional RNN design due to the problem of vanishing gradient during back propagation.

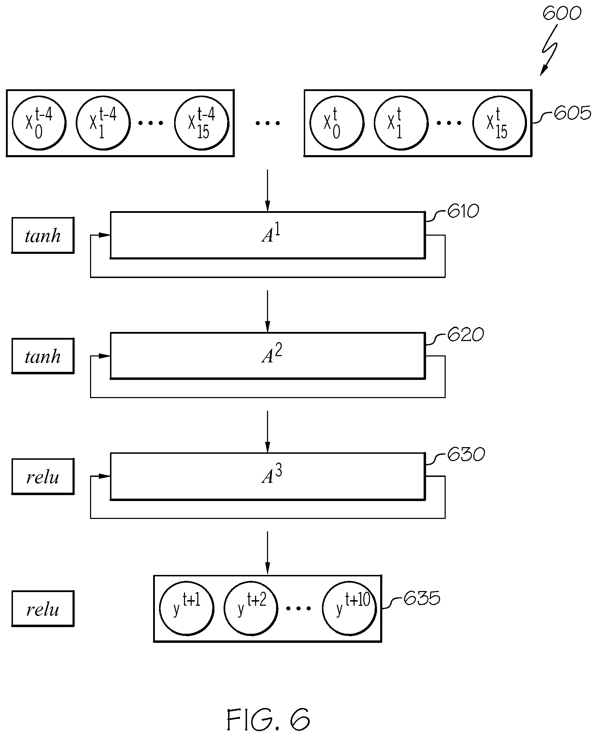

FIG. 6 illustrates a 3-layer LSTM neural network 600 in accordance with an embodiment. FIG. 6 discloses a first layer 610 which consists of 100 nodes with hyperbolic tangent (tanh) activation function from inputs 605, the second layer 620 contains 50 nodes with tanh activation function, the third layer 630 contains 30 nodes with rectified linear unit (ReLU) activation function where the third layer 630 is fully connected with ReLU activation function to the output 635.

The number of nodes and layers and activation functions as presented in the figure is selected based on empirical results. The inputs 605 to the model consist of the following variables: 1) flap angle, 2) GPS longitude, 3) GPS latitude, 4) true heading, 5) true airspeed, 6) wind speed, 7) wind direction, 8) pressure altitude, 9) left engine fan speed, 10) right engine fan speed, 11) aircraft gross weight, 12) static air temperature, 13) body longitudinal acceleration, 14) ground speed, 15) runway ID, 16) aircraft model. The selection of these variables was based on the aerodynamic model of the takeoff presented earlier. The model utilized the measurements of these variables from the last 5 seconds to predict speeds up to 10 seconds ahead.

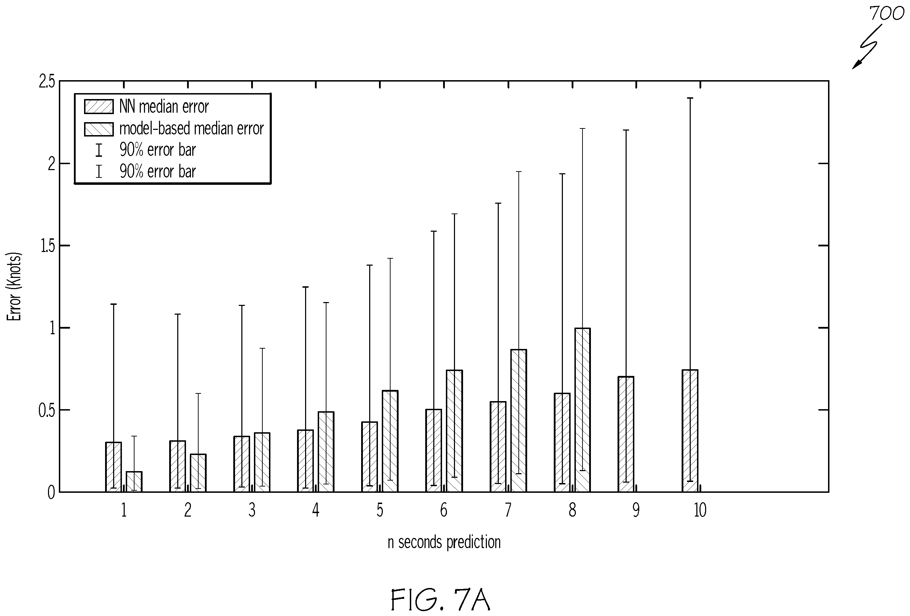

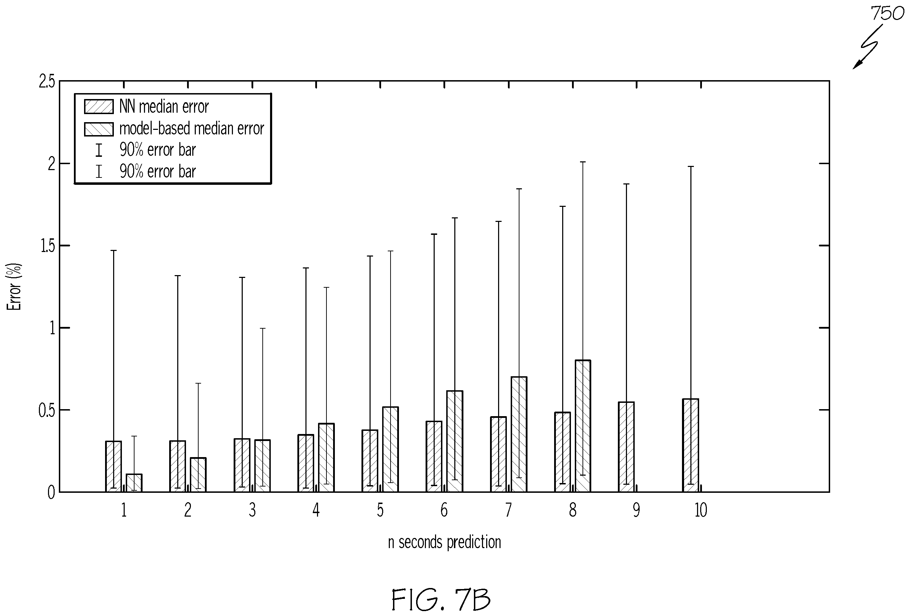

FIGS. 7A and 7B illustrate graphs of absolute and relative errors in speed prediction with changing prediction range, in accordance with an embodiment.

In an exemplary embodiment, to assess the performance of the prediction of the ground speed as illustrated in graphs of FIGS. 7B and 7B; the flight operational quality assurance (FOQA) data from a major international carrier is utilized. In this example, the data consists of more than 100,000 flights, originating from more than 100 airports, from 100 airplanes with 8 various model types of differing aircraft and engine manufacturers. A variable of major influence on the lift and drag, consequently the takeoff performance, is the flap setting. However, the flap settings that were utilized during takeoff is sparse. Henceforth, a different model was learned or trained for each airplane model and flap angle in the aerodynamical model based prediction. In an alternate example, the deep LSTM network based prediction is utilized for the flap angle data as an input to the modeling.

By the use of the prior sensor measurements, the future speeds were predicted for various prediction durations. Each comparison of the observed speeds indicates that both approaches (in graphs 700 and 750) are able to perform a successful prediction with an error of less than 2 knots while predicting 8 seconds ahead as shown in the FIGS. 7A and 7B. Expectedly, the prediction error increases as prediction occurs further ahead. Both model-based and neural network (NN) approaches had performed well, interestingly with similar error rates. Increasing the prediction range degraded the performance of the model based approach. An explanation for this behavior is that the errors in the boundary condition (current ground speed), accumulates during the Adams-Bashforth steps. On the other hand, the deep neural networks were likely to have learned a more effective representation. While predicting only 1 or 2 seconds ahead, the utilization of the aerodynamical model is more successful. This suggests that the learned deep neural network (DNN) models were insufficiently trained on representing the information available through the aerodynamical models.

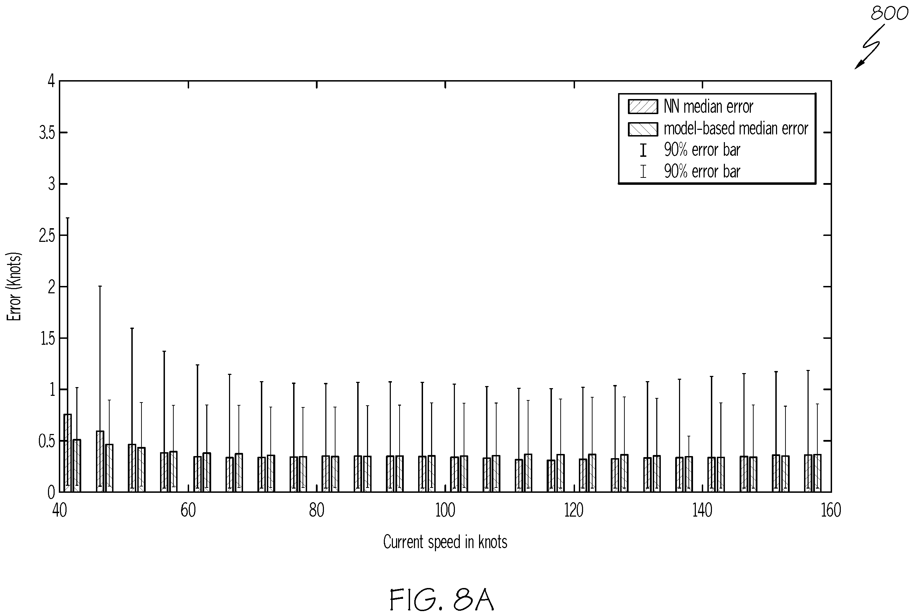

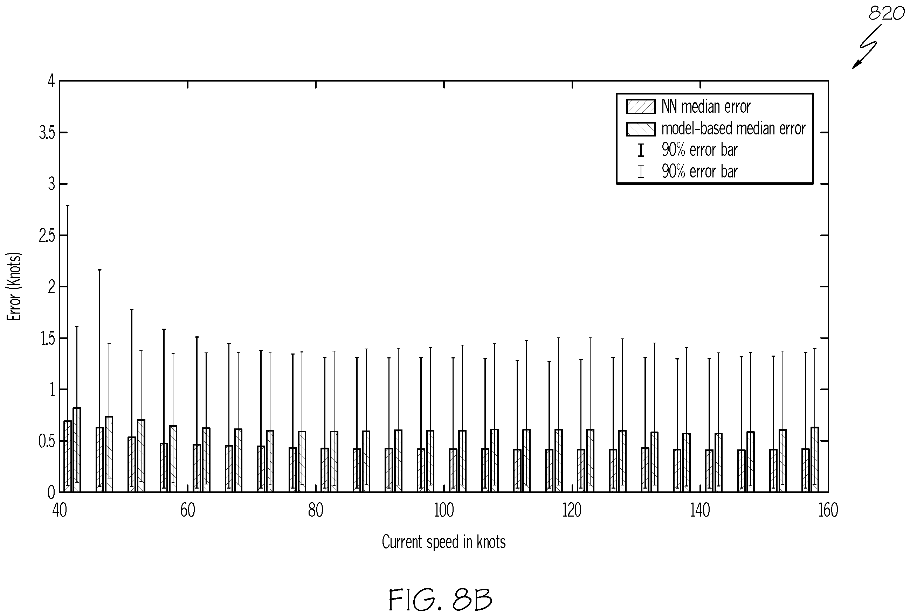

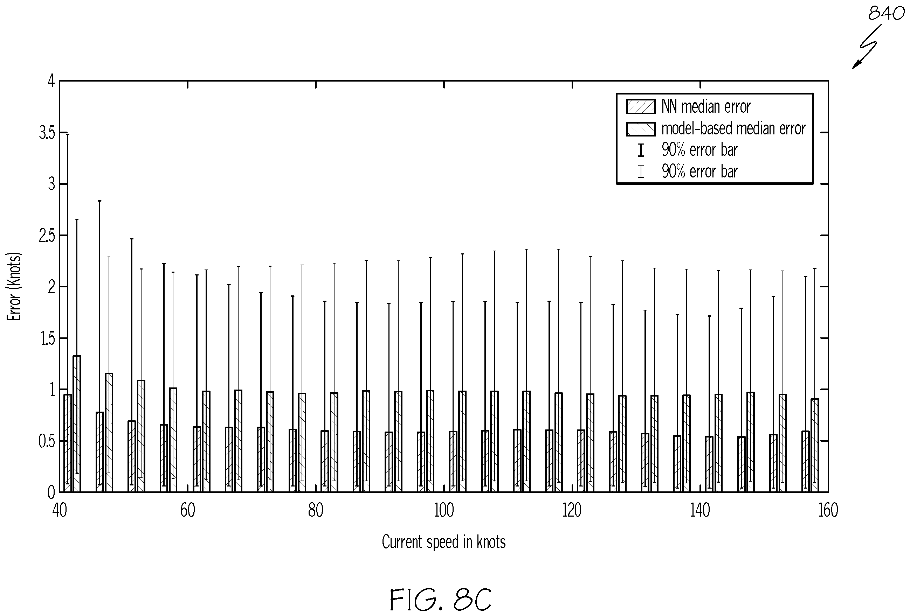

FIGS. 8A, 8B and 8C illustrate graphs of prediction errors at various speeds for predicting 3 seconds ahead (graph 800), 5 seconds ahead (graph 820), and 8 second (graph 840) in accordance with various exemplary embodiments. In an exemplary embodiment, a designated $V_1$ (e.g. 80 knots) represents a threshold or point of the maximum speed to make or take a decisive action to either reject the takeoff or stop the aircraft. Beyond $V_1$, rejection of the takeoff is strongly discouraged and may even be considered dangerous and outside the safety envelope for a safe takeoff execution. Hence, the prediction accuracy before $V_1$ provides the additional importance of informing the pilot on the attainability of the $V_R$ and $V_2$ speeds. Although the available actions are more limited, the predictions are still informative beyond $V_1$ by offering recommendations on thrust adjustments, e.g. increase the thrust in a low acceleration condition. Henceforth, the accuracy of the prediction at various speeds was assessed in FIGS. 8A, 8B, and 8C of (a) 3 sec, (b) 5 sec, (c) 8 sec ahead. Albeit satisfactory, the predictions were slightly worse at low speeds, especially for the LSTM approach. Existence of an initialization bias in the LSTM networks, certain measurements being less accurate in the low speeds, e.g. true air speed, and insufficient samples for flight specific model adaptation are likely to be the explanations for such the differing errors.

Both aerodynamical model and deep learning predictions successfully perform the speed prediction without utilizing proprietary or unknown airplane or environmental conditions. The advantage of deep LSTM networks is the capability to learn the dynamic structure without $\alpha$ priori domain knowledge. With sufficient data and resources, it may even be able to utilize seemingly unrelated variables, e.g. GPS latitude. However, learned deep network models are not transparent. Consequently, it is challenging to separate the contributing factors out, or to exploit the reasoning process of a certain prediction. Additionally, deep networks may struggle on previously never observed conditions. On the other hand, aerodynamical model based approach is more transparent enabling the observance of the contributing factors which cause the anomalous behaviors during a takeoff.

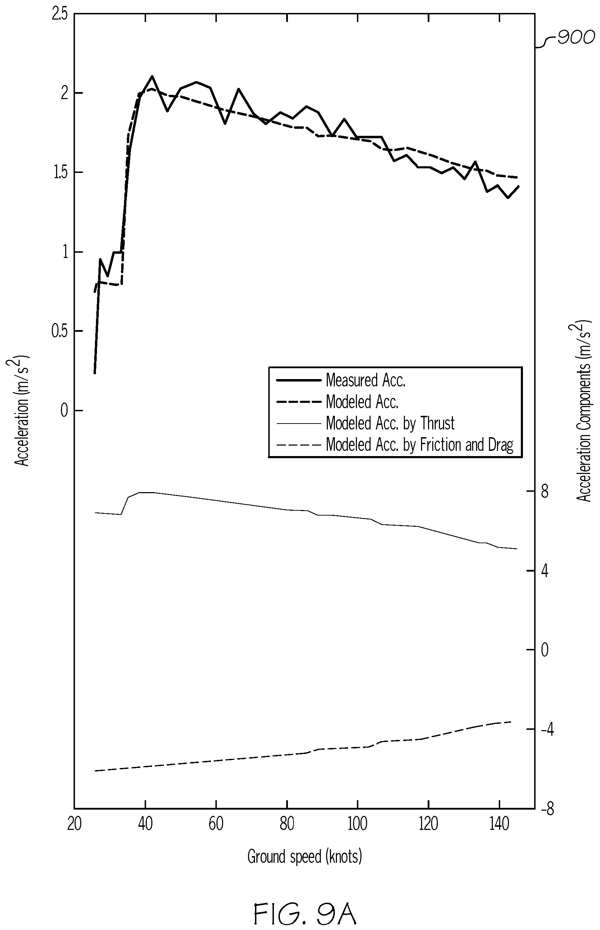

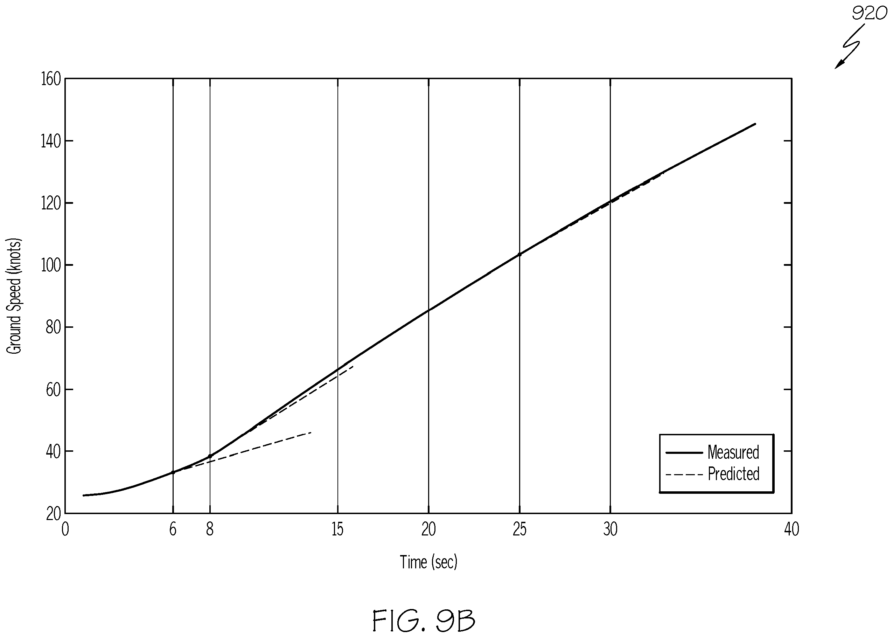

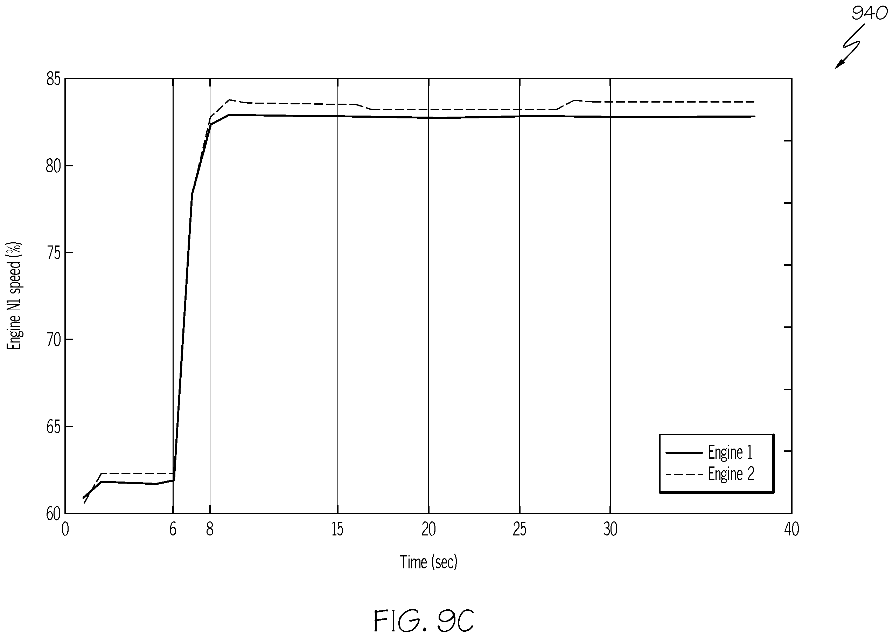

FIGS. 9A, 9B, and 9C disclose graphs of flights with low acceleration in accordance with various exemplary embodiments.

The prediction on an exemplary flight with low acceleration is demonstrated in FIGS. 9A, 9B and 9C. The change in the N1 speed between 6-8 seconds is immediately reflected to the speed prediction, which would not be possible in a simple curve fitting approach. With the aerodynamical model based approach disclosed herein, it is possible to observe the source of the retardation in acceleration to be coming from thrust (i.e. identifying an anomalous behavior prior to aircraft takeoff). In FIG. 9A, graph 900 illustrates the acceleration of the aircraft compared to the ground speed with the corresponding modeling of the acceleration, acceleration by thrust, and acceleration by friction and drag. In FIG. 9B, in graph 920 the ground speed versus time for an aircraft takeoff is shown and the measured and predicted speeds of the aircraft are illustrated on the graph 920. In FIG. 9C, the engine N1 speed versus time is shown for the corresponding engines 1 and 2.

Various exemplary embodiments may include, in conjunction with the methodology described herein, completely data driven characterizations of the flight performance; explainable machine learning experience; deep learning experience on flight analyses; and demonstration of accurate speed prediction capability during takeoff. Also, enhancements may be directed to the possibility of augmenting the initial data set of proprietary parameters and historic data from new air carriers, assessing the reachability of the takeoff speeds (i.e.VR speeds), adding in weatherization information data system (WIDS) applications, and extending to climb operations of the aircraft.

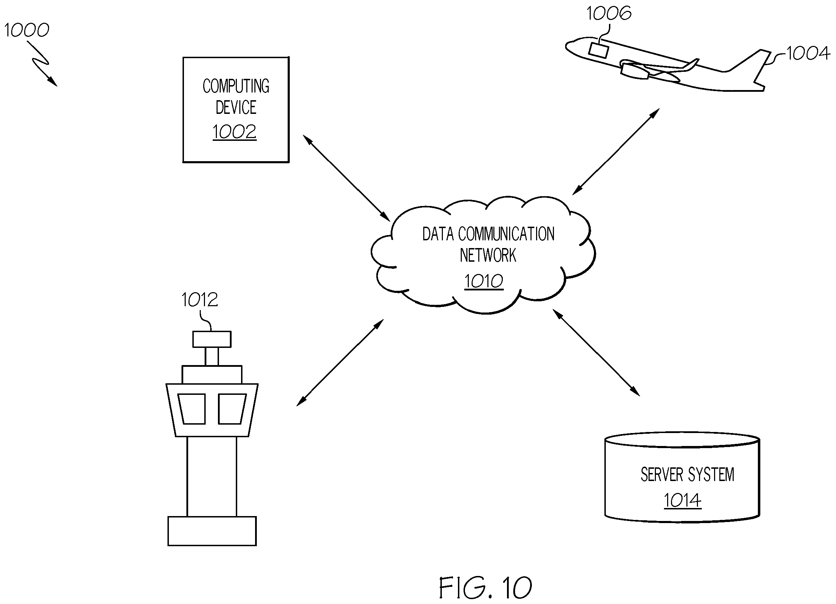

FIG. 10 is a diagram of a communication network of a system for providing modeling of predicted accelerations by data driven systems for identifying and explaining anomalous behavior of an aircraft in accordance with various exemplary embodiments. In FIG. 10 the system 1000 for providing communication of data for modeling of predicted accelerations in accordance with an exemplary embodiment. The system 1000 operates to identify anomalies associated with a current takeoff of the aircraft based on predicted modeled solutions. The system 1000 may include, without limitation, a computing device 1002 that communicates with one or more avionics systems 1006 onboard the aircraft 1004, at least one server system 1014, and air traffic control (ATC) 1012, via a data communication network 1010. In practice, certain embodiments of the system 1000 may include additional or alternative elements and components, as desired for the particular application.

The computing device 1002 may be implemented by any computing device that includes at least one processor, some form of memory hardware, a user interface, and communication hardware and may be separate or integrated in the aircraft 1004. For example, the computing device 102 may be implemented using a personal computing device, such as a tablet computer, a laptop computer, a personal digital assistant (PDA), a smartphone, or the like. In other embodiments, the computing device 1002 may be implemented or integrated into a computer system onboard the aircraft 1004, which is configured to determine the various modeling applications described.

The aircraft 1004 may be any aviation vehicle for modeling for thrust and predicted speeds are relevant and applicable during the takeoff. The aircraft 1004 may be implemented as an airplane, helicopter, spacecraft, hovercraft, or the like. The one or more avionics systems 1006 may include a Flight Management System (FMS), crew alerting system (CAS) devices, Automatic Dependent Surveillance - Broadcast (ADS-B), Controller Pilot Data Link Communication (CPDLC), navigation devices, weather radar, aircraft traffic data, and the like. Data obtained from the one or more avionics systems 1006 may include, without limitation: aircraft characteristics, performance tables and proprietary coefficients, wind speed, surface area, air density, weather data, or the like.

The server system 1014 may include any number of application servers, and each server may be implemented using any suitable computer. In some embodiments, the server system 1014 includes one or more dedicated computers. In some embodiments, the server system 1014 includes one or more computers carrying out other functionality in addition to server operations. The server system 1014 may store and provide any type of data used to, for example proprietary coefficients and performance tables used prior to takeoff.

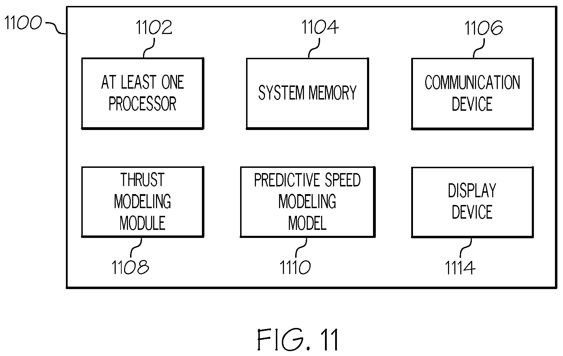

FIG. 11 is a block diagram of architecture of a system for providing modeling of predicted accelerations by data driven systems for identifying and explaining anomalous behavior of an aircraft in accordance with various exemplary embodiments. It should be noted that the computing device 1100 can be implemented with the computing device 1002 depicted in FIG. 10. In this regard, the computing device 1100 shows certain elements and components of the computing device 1002 in more detail.

The computing device 1100 generally includes, without limitation: at least one processor 1102; system memory 1104; a communication device 1106; a thrust modeling module 1108; a prediction speed modeling module 1110; and a display device 1114. These elements and features of the computing device 1100 may be operatively associated with one another, coupled to one another, or otherwise configured to cooperate with one another as needed to support the desired functionality - in particular, providing modeling of thrust and predicted speeds for takeoff, as described herein. For ease of illustration and clarity, the various physical, electrical, and logical couplings and interconnections for these elements and features are not depicted in FIG. 11. Moreover, it should be appreciated that embodiments of the computing device 1100 will include other elements, modules, and features that cooperate to support the desired functionality.

The at least one processor 1102 may be implemented or performed with one or more general purpose processors, a content addressable memory, a digital signal processor, an application specific integrated circuit, a field programmable gate array, any suitable programmable logic device, discrete gate or transistor logic, discrete hardware components, or any combination designed to perform the functions described here. In particular, the at least one processor 1102 may be realized as one or more microprocessors, controllers, microcontrollers, or state machines. Moreover, the at least one processor 1202 may be implemented as a combination of computing devices, e.g., a combination of digital signal processors and microprocessors, a plurality of microprocessors, one or more microprocessors in conjunction with a digital signal processor core, or any other such configuration.

The at least one processor 1102 is communicatively coupled to the system memory 1104. The system memory 1104 is configured to store any obtained or generated data associated with thrust and predictive speed modeling prior to takeoff. The system memory 1104 may be realized using any number of devices, components, or modules, as appropriate to the embodiment. The communication device 1106 is suitably configured to communicate data between the computing device 1100 and one or more remote servers, one or more avionics systems onboard an aircraft, and air traffic control and/or ground control. The communication device 1106 may transmit and receive communications over a wireless local area network (WLAN), the Internet, a satellite uplink/downlink, a cellular network, a broadband network, a wide area network, a radio communication network, or the like.

The thrust modeling module 1108 and the prediction speed modeling module 1110 are configured to generate performance modeling of the thrust, parameter estimation and predictions of future speeds. The display device 1114 is configured to display various icons, text, and/or graphical elements for thrust, parameter estimation and predictions of future speed, or the like. In an exemplary embodiment, the display device 1114 is communicatively coupled to the at least one processor 1202. The at least one processor 1102 and the display device 1114 are cooperatively configured to display, render, or otherwise convey one or more graphical representations or images associated with the various modeling steps on the display device 1114.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

The following description refers to elements or nodes or features being "connected" or "coupled" together. As used herein, unless expressly stated otherwise, "coupled" means that one element/node/feature is directly or indirectly joined to (or directly or indirectly communicates with) another element/node/feature, and not necessarily mechanically. Likewise, unless expressly stated otherwise, "connected" means that one element/node/feature is directly joined to (or directly communicates with) another element/node/feature, and not necessarily mechanically. Thus, although the schematic shown depicts one exemplary arrangement of elements, additional intervening elements, devices, features, or components may be present in an embodiment of the depicted subject matter.

For the sake of brevity, conventional techniques related to signal processing, data transmission, signaling, network control, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims.

**Claims**

1. An apparatus for detecting performance of a current takeoff of an aircraft by predicting at least one takeoff performance characteristic of an aircraft prior to takeoff for a current flight, the apparatus comprising:

    at least one processor (1102) deployable on the aircraft, the at least one processor (1102) being programmed to implement, when a model of thrust based on a look-up table is unavailable, a trained model of thrust of the aircraft during a takeoff having a first component based on sensor data contributed from the current flight takeoff and having a second component based on derivative data contributed from a prior flight takeoff wherein the first and second components used in the modeling of the thrust are based on at least one aircraft takeoff performance characteristic of: acceleration from thrust, friction from slope, and drag from friction of the aircraft during the takeoff;
    the at least one processor (1102) having an input coupled to receive sensor data from at least one sensor system deployed on the aircraft;
    the at least one processor (1102) having an associated memory (1104) for acquiring, prior to the takeoff for the current flight, the derivative data contributed from a prior flight takeoff;
    the at least one processor (1102) being programmed to use the trained thrust model to predict, under conditions of missing or uncertain information about a engine thrust characteristic functions of the aircraft or about environmental conditions, the at least one aircraft takeoff performance characteristic for a subsequent takeoff time in the future relative to a current takeoff time; and
    the at least one processor (1102) being configured to supply the at least one takeoff performance characteristic to an avionics system on board the aircraft.

2. The apparatus of claim 1 wherein the trained model is an aerodynamic model adapted to model an acceleration or a speed prediction of the aircraft.

3. The apparatus of claim 1, further comprising:
   the at least one processor (1102) being configured to predict future speed calculations of takeoff of the aircraft using a neural network model implemented as a long short-term memory (LSTM).

4. The apparatus of claim 2, further comprising:
   the at least one processor (1102) being configured to learn from a set of characteristics of a prior flight in order to estimate the thrust of the engine of the aircraft which corresponds to a set of variables measured by a plurality of sensors of the aircraft wherein the set of variables comprise: airspeed, revolutions per minute (RPMs) of the engine, temperature and pressure ratios wherein the thrust of the engine of the aircraft corresponds directly to a set of flight characteristics which comprise the airspeed, revolutions per minute of the engine, temperature and pressure ratios.

5. The apparatus of claim 4, wherein the thrust model incorporates specific scaling factors to account for factors retarding thrust in the thrust model which are unmeasured.

6. The apparatus of claim 5, wherein the trained model adapted to model an acceleration or a speed prediction is configured to determine, by a flight specific parameter, an influence of prior flight data in calculations of the acceleration or the speed prediction.

7. The apparatus of claim 6, further comprising:
the at least one processor (1102) being programmed to use a prediction model to predict, under conditions of missing or uncertain information about engine thrust characteristic functions of the aircraft or about environmental conditions, at least one variable parameter related to a future speed for a subsequent takeoff at a subsequent takeoff time in the future relative to a current takeoff time based on an estimation of a corresponding flight specific parameter and a set of measurements up to a current time prior to a takeoff of the aircraft.

8. The apparatus of claim 7 wherein the prediction model has the latest ground speed measure as boundary condition to predict future speed estimations.

9. The apparatus of claim 2, further comprising:
the at least one processor (1102) being configured to learn from characteristics of a prior flight in order to estimate the thrust of the engine that corresponds to a set of variables measured by a plurality of sensors wherein the set of variables comprises: airspeed, revolutions per minute (RPMs) of the engine, temperature and pressure ratios wherein the thrust of the engine of the aircraft corresponds to a set of flight characteristics which comprise the airspeed, revolutions per minute, temperature and pressure ratios.

10. The apparatus of claim 9, further comprising:
the at least one processor (1102) being configured to predict future speed calculations of takeoff of the aircraft using a recurrent neural network (RNN) model implemented as a long short-term memory (LSTM).

**Patentansprüche**

1. Vorrichtung zum Erkennen der Leistung eines aktuellen Starts eines Flugzeugs durch Vorhersagen mindestens eines Startleistungsmerkmals eines Flugzeugs vor dem Start für einen aktuellen Flug, wobei die Vorrichtung umfasst:

mindestens einen Prozessor (1102), der im Flugzeug einsetzbar ist, wobei der mindestens eine Prozessor (1102) so programmiert ist, dass bei Nichtverfügbarkeit eines auf einer Nachschlagetabelle beruhenden Schubmodells realisiert wird,
ein trainiertes Schubmodell des Flugzeugs während eines Starts, das eine erste Komponente aufweist, die auf Sensordaten beruht, die vom aktuellen Flugstart stammen, und eine zweite Komponente, die auf abgeleiteten Daten beruht, die von einem vorherigen Flugstart stammen, wobei die bei der Modellierung des Schubs verwendete erste und zweite Komponente auf mindestens einem Flugzeug-Startleistungsmerkmal beruhen aus: Beschleunigung durch Schub, Reibung durch Neigung und Widerstand durch Reibung des Flugzeugs während des Starts;
wobei der mindestens eine Prozessor (1102) einen Eingang aufweist, der so verbunden ist, dass Sensordaten von mindestens einem im Flugzeug eingesetzten Sensorsystem empfangen werden;
wobei der mindestens eine Prozessor (1102) einen zugeordneten Speicher (1104) aufweist, um vor dem Start für den aktuellen Flug die abgeleiteten Daten zu erfassen, die von einem vorherigen Flugstart stammen;
wobei der mindestens eine Prozessor (1102) so programmiert ist, dass das trainierte Schubmodell verwendet wird, um unter Bedingungen fehlender oder unsicherer Informationen über Triebwerksschubmerkmalsfunktionen des Flugzeugs oder über Umgebungsbedingungen das mindestens eine Flugzeugstartleistungsmerkmal für eine im Verhältnis zu einer aktuellen Startzeit nachfolgende Startzeit in der Zukunft vorherzusagen; und
wobei der mindestens eine Prozessor (1102) so konfiguriert ist, dass das mindestens eine Startleistungsmerkmal einem Bordelektroniksystem an Bord des Flugzeugs bereitgestellt wird.

2. Vorrichtung nach Anspruch 1, wobei das trainierte Modell ein aerodynamisches Modell ist, das zum Modellieren einer Beschleunigung oder einer Geschwindigkeitsvorhersage des Flugzeugs ausgelegt ist.

3. Vorrichtung nach Anspruch 1, ferner umfassend:
dass der mindestens eine Prozessor (1102) so konfiguriert ist, dass zukünftige Geschwindigkeitsberechnungen des Starts des Flugzeugs unter Verwendung eines neuronalen Netzwerkmodells vorhergesagt werden, das als Long Short-Term Memory (LSTM) realisiert ist.

4.  Vorrichtung nach Anspruch 2, ferner umfassend:
    dass der mindestens eine Prozessor (1102) konfiguriert ist, um aus einem Satz von Merkmalen eines vorherigen Fluges zu lernen, um den Schub des Triebwerks des Flugzeugs zu schätzen, der einem Satz von Variablen entspricht, die durch eine Vielzahl von Sensoren des Flugzeugs gemessen werden, wobei der Satz von Variablen umfasst: Fluggeschwindigkeit, Umdrehungen pro Minute (1 /min) des Triebwerks, Temperatur- und Druckverhältnisse, wobei der Schub des Triebwerks des Flugzeugs direkt einem Satz von Flugmerkmalen entspricht, die die Fluggeschwindigkeit, Umdrehungen pro Minute des Triebwerks, Temperatur- und Druckverhältnisse umfassen.

5.  Vorrichtung nach Anspruch 4, wobei das Schubmodell bestimmte Skalierungsfaktoren enthält, um Faktoren zu berücksichtigen, die den Schub im Schubmodell verzögern, die nicht gemessen werden.

6.  Vorrichtung nach Anspruch 5, wobei das trainierte Modell, das zum Modellieren einer Beschleunigung oder einer Geschwindigkeitsvorhersage ausgelegt ist, so konfiguriert ist, dass durch einen flugspezifischen Parameter ein Einfluss vorheriger Flugdaten bei Berechnungen der Beschleunigung oder der Geschwindigkeitsvorhersage ermittelt wird.

7.  Vorrichtung nach Anspruch 6, ferner umfassend:
    dass der mindestens eine Prozessor (1102) so programmiert ist, dass ein Vorhersagemodell verwendet wird, um unter Bedingungen fehlender oder unsicherer Informationen über Triebwerksschubmerkmalsfunktionen des Flugzeugs oder über Umgebungsbedingungen auf der Grundlage einer Schätzung eines entsprechenden flugspezifischen Parameters und eines Satzes von Messungen bis zu einer aktuellen Zeit vor einem Start des Flugzeugs mindestens ein variabler Parameter in Bezug auf eine zukünftige Geschwindigkeit für einen im Verhältnis zu einer aktuellen Startzeit nachfolgenden Start zu einer nachfolgenden Startzeit in der Zukunft vorherzusagen.

8.  Vorrichtung nach Anspruch 7, wobei das Vorhersagemodell die neueste Bodengeschwindigkeitsmessung als Randbedingung zum Vorhersagen zukünftiger Geschwindigkeitsschätzungen aufweist.

9.  Vorrichtung nach Anspruch 2, ferner umfassend:
    dass der mindestens eine Prozessor (1102) konfiguriert ist, um aus Merkmalen eines vorherigen Fluges zu lernen, um den Schub des Triebwerks zu schätzen, der einem Satz von Variablen entspricht, die durch eine Vielzahl von Sensoren gemessen werden, wobei der Satz von Variablen umfasst: Fluggeschwindigkeit, Umdrehungen pro Minute (1/min) des Triebwerks, Temperatur- und Druckverhältnisse, wobei der Schub des Triebwerks des Flugzeugs einem Satz von Flugmerkmalen entspricht, die die Fluggeschwindigkeit, Umdrehungen pro Minute, Temperatur- und Druckverhältnisse umfassen.

10. Vorrichtung nach Anspruc 9, ferner umfassend:
    dass der mindestens eine Prozessor (1102) so konfiguriert ist, dass zukünftige Geschwindigkeitsberechnungen des Starts des Flugzeugs unter Verwendung eines rekurrenten neuronalen Netzwerkmodells (RNN-Modell) vorhergesagt werden, das als Long Short-Term Memory (LSTM) realisiert ist.

**Revendications**

1.  Appareil de détection des performances d'un décollage actuel d'un aéronef par prédiction d'au moins une caractéristique de performances de décollage d'un aéronef avant le décollage pour un vol actuel, l'appareil comprenant :

    au moins un processeur (1102) déployable sur l'aéronef, le au moins un processeur (1102) étant programmé pour mettre en œuvre, en cas d'indisponibilité d'un modèle de poussée basé sur une table de consultation, un modèle instruit de poussée de l'aéronef pendant un décollage, dont une première composante est basée sur des données de capteur apportées par le décollage de vol actuel et dont une seconde composante est basée sur des données dérivées fournies par un décollage de vol antérieur, dans lequel les première et seconde composantes utilisées dans la modélisation de la poussée sont basées sur au moins une caractéristique de performances de décollage d'aéronef parmi : une accélération provenant d'une poussée, un frottement provenant d'une pente et une traînée provenant d'un frottement de l'aéronef pendant le décollage ;
    le au moins un processeur (1102) ayant une entrée couplée pour recevoir des données de capteur d'au moins un système de capteur déployé sur l'aéronef ;
    le au moins un processeur (1102) ayant une mémoire associée (1104) permettant d'acquérir, avant le décollage pour le vol en cours, les données dérivées apportées par un décollage de vol antérieur ;

le au moins un processeur (1102) étant programmé pour utiliser le modèle de poussée instruit pour prédire, dans des conditions d'informations manquantes ou incertaines concernant des fonctions caractéristiques de poussée de moteur de l'aéronef ou concernant des conditions environnementales, la au moins une caractéristique de performances de décollage d'aéronef pour une heure de décollage ultérieure à l'avenir par rapport à une heure de décollage actuelle ; et

le au moins un processeur (1102) étant configuré pour fournir la au moins une caractéristique de performances de décollage à un système avionique à bord de l'aéronef.

2. Appareil selon la revendication 1, dans lequel le modèle instruit est un modèle aérodynamique adapté pour modéliser une accélération ou une prédiction de vitesse de l'aéronef.

3. Appareil selon la revendication 1, comportant en outre :
le au moins un processeur (1102), configuré pour prédire des calculs de vitesse future de décollage de l'aéronef à l'aide d'un modèle de réseau neuronal mis en œuvre sous forme de longue mémoire à court terme (LSTM).

4. Appareil selon la revendication 2, comportant en outre :
le au moins un processeur (1102), configuré pour apprendre à partir d'un ensemble de caractéristiques d'un vol antérieur afin d'estimer la poussée du moteur de l'aéronef qui correspond à un ensemble de variables mesurées par une pluralité de capteurs de l'aéronef, dans lequel l'ensemble de variables comprend : la vitesse, le nombre de tours par minute (RPM) du moteur et les rapports de température et de pression, dans lequel la poussée du moteur de l'aéronef correspond directement à un ensemble de caractéristiques de vol qui comprennent la vitesse, le nombre de tours par minute du moteur et les rapports de température et de pression.

5. Appareil selon la revendication 4, dans lequel le modèle de poussée incorpore des facteurs spécifiques de mise à l'échelle, pour tenir compte de facteurs retardant la poussée qui ne sont pas mesurés dans le modèle de poussée.

6. Appareil selon la revendication 5, dans lequel le modèle instruit, adapté pour modéliser une accélération ou une prédiction de vitesse, est configuré pour déterminer, par un paramètre propre au vol, une influence de données de vol antérieures dans des calculs de l'accélération ou de la prédiction de vitesse.

7. Appareil selon la revendication 6, comportant en outre :
le au moins un processeur (1102), programmé pour utiliser un modèle de prédiction pour prédire, dans des conditions d'informations manquantes ou incertaines concernant des fonctions caractéristiques de poussée de moteur de l'aéronef ou concernant des conditions environnementales, au moins un paramètre variable lié à une vitesse future pour un décollage ultérieur à une heure de décollage ultérieure à l'avenir par rapport à une heure de décollage actuelle en fonction d'une estimation d'un paramètre correspondant spécifique à un vol et d'un ensemble de mesures jusqu'à une heure actuelle avant un décollage de l'aéronef.

8. Appareil selon la revendication 7, dans lequel le modèle de prédiction a comme condition de limite la dernière mesure de vitesse au sol pour prédire les estimations de vitesse future.

9. Appareil selon la revendication 2, comportant en outre :
le au moins un processeur (1102), configuré pour apprendre à partir des caractéristiques d'un vol antérieur, afin d'estimer la poussée du moteur qui correspond à un ensemble de variables mesurées par une pluralité de capteurs, dans lequel l'ensemble de variables comprend : la vitesse, le nombre de tours par minute (RPM) du moteur et des rapports de température et de pression, dans lequel la poussée du moteur de l'aéronef correspond à un ensemble de caractéristiques de vol qui comprennent la vitesse, le nombre de tours par minute et les rapports de température et de pression.

10. Appareil selon la revendication 9, comportant en outre :
le au moins un processeur (1102), configuré pour prédire des calculs de vitesse future de décollage de l'aéronef en utilisant un modèle de réseau neuronal récurrent (RNN) mis en œuvre sous forme de longue mémoire à court terme (LSTM).

100

$F_{Slope}\,f(\phi_t)$   uphill ← → downhill   115

Friction $f(\mu_t)$   120

Drag $(D_t)$   125

Thrust $(T_t)$   130

FIG. 1

*200*

```
┌─────────────────────────────┐
│   THRUST FUNCTION OF PRESSURE│  ⌐210
│        RATIO, N1 SPEED,      │
│ TRUE AIRSPEED AND TEMPERATURE│
└─────────────────────────────┘
                │
                ▼
┌─────────────────────────────┐
│   CHARACTERISTICS DEPEND ON  │  ⌐220
│        MODEL OF ENGINE       │
└─────────────────────────────┘
                │
                ▼
┌─────────────────────────────┐
│      MODELING OF THRUST      │  ⌐230
│       CHARACTERISTICS        │
└─────────────────────────────┘
                │
                ▼
┌─────────────────────────────┐
│      USE DATA TO LEARN       │  ⌐240
│       CHARACTERISTICS        │
└─────────────────────────────┘
                │
                ▼
┌─────────────────────────────┐
│     PARAMETRIC MODEL FOR     │  ⌐250
│       EACH ENGINE MODEL      │
└─────────────────────────────┘
```

FIG. 2

300

STEP 1 | ESTIMATE VARIABLE PARAMETERS FOR THE CURRENT FLIGHT |—310

OTHER FLIGHTS SAME AIRCRAFT MODE, SAME FLAP SETTING —315

PRIOR

MEASUREMENTS UP TO CURRENT SAMPLE —319

$d_k, B_k$ —317

STEP 2 | EXTRAPOLATE MEASUREMENTS IE. WEIGHT BY LINEAR INTERPOLATION ASSUME CONSTANT PREDICTION INTERVAL |—320

STEP 3 | PREDICT SPEEDS - ESTIMATE ACCELERATION AT FUTURE TIME PT. |—330

FIG. 3

_400_

y_t 430

RNN
420

x_t 410

FIG. 4

FIG. 5

600

605

$x_0^{t-4}$  $x_1^{t-4}$  ···  $x_{15}^{t-4}$  ···  $x_0^t$  $x_1^t$  ···  $x_{15}^t$

*tanh*  →  $A^1$  — 610

*tanh*  →  $A^2$  — 620

*relu*  →  $A^3$  — 630

*relu*  $y^{t+1}$  $y^{t+2}$  ···  $y^{t+10}$  — 635

FIG. 6

FIG. 7A

EP 3 572 332 B1

FIG. 7B

FIG. 8A

*FIG. 8B*

FIG. 8C

FIG. 9A

FIG. 9B

940

FIG. 9C

FIG. 10

EP 3 572 332 B1

1100

| 1102 | 1104 | 1106 |
|------|------|------|
| AT LEAST ONE PROCESSOR | SYSTEM MEMORY | COMMUNICATION DEVICE |
| THRUST MODELING MODULE | PREDICTIVE SPEED MODELING MODEL | DISPLAY DEVICE |
| 1108 | 1110 | 1114 |

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4837695 A
- EP 0082663 A
- WO 2006137937 A
- EP 2637151 A
- US 4980833 A